# EUROPEAN PATENT SPECIFICATION

(11) **EP 3 718 689 B1**
(45) Date of publication and mention of the grant of the patent: **27.09.2023**
(21) Application number: 18884543.2
(22) Date of filing: 31.05.2018
(51) Int. Cl.: B23Q 3/155

(54) **TOOL GRIPPER FOR MACHINE TOOL**
WERKZEUGGREIFER FÜR EINE WERKZEUGMASCHINE
PRÉHENSEUR D'OUTIL POUR MACHINE-OUTIL

(30) Priority: 30.11.2017 KR 20170163013
(43) Date of publication of application: 07.10.2020
(73) Proprietor: Hyundai Wia Corporation, Changwon-si, Gyeongsangnam-do 51533 (KR)
(72) Inventor: LEE, Dal Ho, Seoul 06691 (KR); KORFF, Dennis, 64584 Bibensheim (DE); NOWAK, Erik, 68165 Mannheim (DE); HOERNER, Johannes, 64287 Darmstadt (DE)
(74) Representative: Viering, Jentschura & Partner mbB Patent- und Rechtsanwälte
(86) International application number: PCT/KR2018/006219
(87) International publication number: WO 2019/107682

(56) References cited:
- CN-A- 106 041 588
- DE-A1-102008 014 779
- JP-A- 2006 088 274
- KR-A- 20110 069 933
- KR-A- 20180 047 076
- KR-B1- 101 564 963
- KR-U- 20010 001 998
- US-A1- 2014 235 414
- US-A1- 2016 101 493

## Description

### Technical Field

The present invention relates to a tool gripper for mounting tools of a machine tool and, more particularly, to a tool gripper that is mounted on a machine tool which can automatically change tools, is configured in an integrated type to be able to minimize the number of parts, and makes it possible to elastically insert and take out tools.

### Background Art

In general, machine tools are equipped with an automatic tool changer that enables automatic change of tools. An automatic tool changer is used when pulling out a tool, which has been used, from a spindle, and taking out a tool for the next machining from a tool magazine and then mounting the tool back in the spindle. A gripper is required to keep or move a tool mounted on the automatic tool changer.

Accordingly, grippers were implemented using a plurality of parts to perform the complicated mechanism of automatic tool changers in the related art. For example, when a spring is used to elastically grip a tool, there is a need for additional parts such as a bearing that supports the spring and enables a gripper to operate in addition to the spring, so the number of parts increases and the structure is complicated. Further, as the number of parts increases, additional problems are generated such as an increase of the assembly processes and cumbersome maintenance.

Accordingly, there is a need for a tool gripper for a machine tool, the tool gripper being able to simplify the production and assembly process thereof, simplify maintenance, and reduce the manufacturing cost by simplifying complicated components of grippers in the related art.

The description provided above as a related art of the present invention is just for helping understanding the background of the present invention and should not be construed as being included in the related art known by those skilled in the art.

There is KR10-2014-0047463(A) as related art.

DE 10 2008 014779 A1 forms the base of the preamble of claim 1 and discloses that a tool magazine for a machine tool has elastically expandable holding arms for receiving a shank of a tool and a spreading device for increasing the distance of the holding arms from each other.

US 2016/101493 A1 discloses tool tongs for the releasable holding of a tool, for example in a machine tool. The tool tongs are formed by a tongs basic element and a tongs clamping element interacting and connected with the tongs basic element, wherein in the tool holding position the tongs basic element and the tongs clamping element hold the tool clampingly at its gripping elements, wherein the tongs basic element and/or the tongs clamping element is/are formed of flat material or plate-like material, such as, for example, steel sheet or the like.

CN 106 041 588 A discloses a main shaft cutter shank clamping seat and belongs to the technical field of machining equipment. The main shaft cutter shank clamping seat comprises a body. A C-shaped bayonet is formed in one end of the body. Clamping hooks are arranged on the both two sides of the bayonet. One end of each clamping hook is fixedly connected with the body, and the other end of each clamping hook extends towards the opening of the bayonet. The end of each clamping hook is provided with a clamping head bent towards the bayonet. The distance between the clamping heads on the two clamping hooks is smaller than the width of the opening of the bayonet. Gaps are formed between the two clamping hooks and the body, and the two clamping hooks can elastically extend and retract to be towards or far away each other through the gaps.

US 2014/235414 A1 discloses that a tool holding device of a machine tool, which holds a tool holder on which a tool is mounted, includes a holding member body and a pair of arm members that are provided on the holding member body. Roller members, which are engaged with a holding groove of the tool holder, are mounted on tips of the arm members. In addition, the holding member body, the pair of arm members, and elastic hinge members that connect the holding member body with the arm members are integrally formed.

### Disclosure

### Technical Problem

The present invention has been made in an effort to solve the problems and an objective of the present invention is to provide a tool gripper for a machine tool, the tool gripper being able to simplify the production and assembly process thereof, simplify maintenance, and reduce the manufacturing cost by simplifying complicated components of grippers in the related art.

### Technical Solution

The present disclosure provides a tool gripper for a machine tool according to claim 1 for achieving the objectives.

In one or more embodiments, the guide arms and the support may be disposed at a side of the base, and a fastening hole for fastening the tool magazine and a position hole in which a fixing pin enabling relative positioning to the tool magazine is fastened may be formed at another side of the base.

In one or more embodiments, the pair of guide arms may be symmetrically formed and may support the tool with the same pressure by pressing the tool in opposite directions.

In one or more embodiments, the second end portions of the guide arms may bend into the insertion space and then extend such that bending portions and the guide protrusions form the manual grooves, so the tool may be mounted and separated by removing pressing force of the guide arms through the manual grooves when the tool cannot be mounted and separated.

In one or more embodiments, the supporting protrusion may have a first end fixed to the support, a second end extending toward the tool, and a second end portion formed in a shape corresponding to an outer side of the tool and having a predetermined curvature.

In one or more embodiments, a recessed groove recessed toward the support may be formed at a center of the first end of the supporting protrusion, so the supporting protrusion may be divided into a pair symmetric with the recessed groove therebetween, and the supporting protrusion may be formed in a cantilever shape, whereby when the tool is mounted, ends facing the guide arms may elastically press the tool in close contact with the tool.

In one or more embodiments, the base, the guide arms, and the support may be made of the same material as a single part.

In one or more embodiments, the guide protrusion may have a first guide portion facing an inlet through which the tool is inserted into the insertion space and a second guide portion facing the support.

In one or more embodiments, the first guide portions may be formed in arc shapes being convex toward the insertion space and having a predetermined curvature, so when the tool is inserted, the tool may be guided in contact with the first guide portions.

In one or more embodiments, the second guide portion may form a taper from an end of the first guide portion to the guide arm.

In one or more embodiments, the guide protrusion may further have a connecting portion formed to be concave toward the guide protrusion between the second guide portion and the guide arm such that the entire length of the guide protrusion is small.

In one or more embodiments, the first end of the guide arm may bend to make an obtuse angle with the base and then may bend and extend to make a right angle, whereby the guide protrusion may be given elasticity.

In one or more embodiments, both sides of the first end of the support may be recessed inward, so spacing grooves may be formed, and gaps between the guide protrusions and the support may be uniformly formed from the first ends of the guide arms to the guide protrusions by the spacing grooves.

In one or more embodiments, the second end of the support may be larger in width than the first end, so a contact area between the tool and the support may increase.

A point where the guide protrusion comes in contact with the tool or the second end portion of the supporting protrusion may be given lower hardness than that of the other portion.

### Advantageous Effects

According to the tool gripper for a machine tool which has the structure described above, since the gripper is formed in an integrated type that minimizes the components, there is the advantage that manufacturing and assembling are simple and mass production is easy in comparison to the related art. Further, maintenance and replacement are easy, so productivity is improved. Further, when a worker manually inserts and pulls out a tool, the worker can work with only one hand, so convenience for the worker can be remarkably improved.

### Description of Drawings

FIG. 1 is a perspective view of a tool gripper for a machine tool according to an embodiment of the present invention.
FIG. 2 is a view of FIG. 1 seen from the bottom.
FIG. 3 is a plan view showing the case in which a tool has been mounted on the gripper.
FIG. 4 is a side view of FIG. 3.

### Mode for Invention

Hereafter, a gripper for a machine tool according to an embodiment of the present invention is described hereafter with reference to the accompanying drawings.

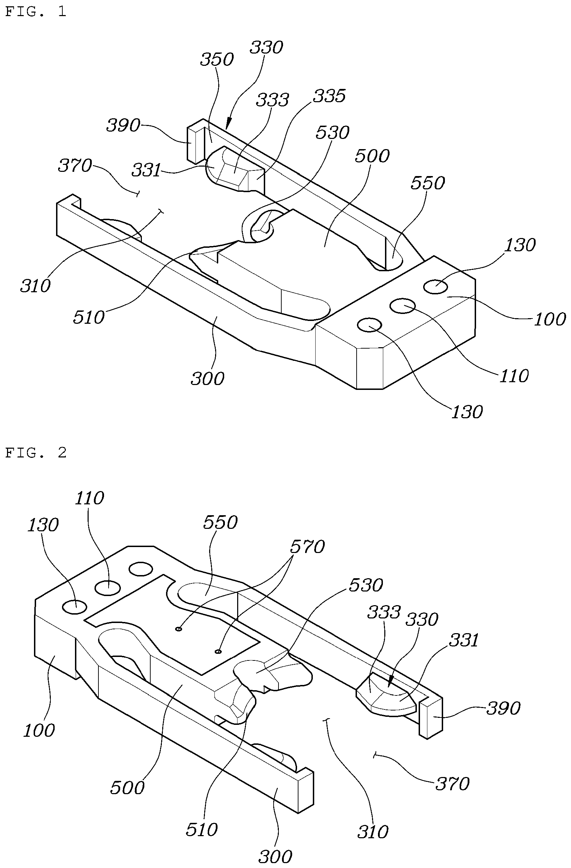

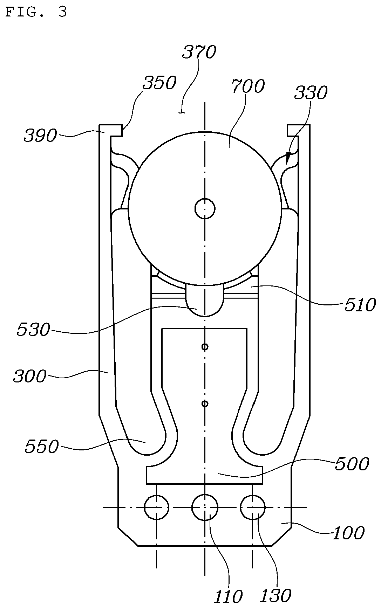

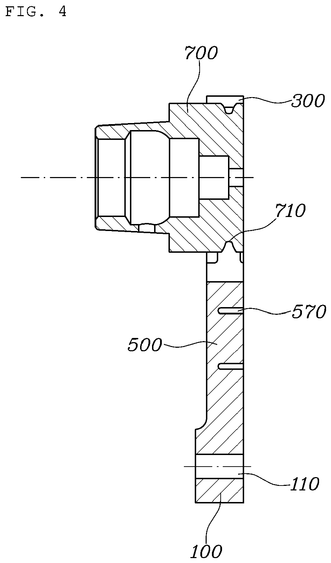

FIG. 1 is a perspective view of a tool gripper for a machine tool according to an embodiment of the present invention, FIG. 2 is a view of FIG. 1 seen from the bottom, FIG. 3 is a plan view showing the case in which a tool 700 has been mounted on the gripper, and FIG. 4 is a side view of FIG. 3.

As shown in FIGS. 1 and 2, a tool gripper for a machine tool according to an exemplary embodiment of the present invention includes: a base 100 to which a tool magazine (not shown) is detachably coupled; a pair of guide arms 300 disposed at both sides of the base 100 to make an insertion space 310 for a tool 700 with the base 100, each having a first end fixed to the base 100 and a second end having a cantilever shape extending toward the tool 700, and each having a guide protrusion 330 formed at the second end to come in contact with the tool 700 such that the guide protrusions 330 press both sides of the tool 700 by elasticity acting at the second ends about fixed first ends; and a support 500 extending toward the tool 700 between the guide arms 300 at both sides of the base 100 and having a supporting protrusion 510 supporting the tool 700 at an end. In particular, the base 100, the guide arms 300, and the support 500 may be made of the same material as a single part.

The base 100 is formed to have a predetermined thickness. The guide arms 300 and the support 500 are disposed at a side of the base 100 and a plurality of holes are formed at another side, in which the holes include a fastening hole 110 and positioning holes 130. Although it is exemplarily shown in FIG. 1 that a plurality of holes is formed in a line in the longitudinal direction of the base 100, the shape and the number of the holes that are formed at the base 100 may be freely changed, depending on the shape, the use, etc. of the tool magazine. The holes of the base 100 include a fastening hole 110 at the center and positioning holes 130 at both sides of the fastening hole 110. The fastening hole 110 is a threaded hole for fastening the gripper to the tool magazine through a fastening member (not shown) and the positioning holes 130 are holes in which fixing pins (not shown) are fastened to set the position of the gripper relative to the tool magazine. Accordingly, a position is set by inserting fixing pins into the positioning holes 130 formed at the base 100 and then the gripper is firmly fixed to the tool magazine by the fastening member and the fastening hole 110.

The base 100 is formed thicker than the guide arms 300 and the support 500, so a portion that needs to be ground when the gripper is formed and machined is easily distinguished and grinding is easily performed. That is, in the present invention, since the gripper and the tool magazine are combined through the base 100, the gripper and the tool magazine are in close surface contact with each other even only by the area of the base 100. Accordingly, there is the advantage that the surface contact portion is minimized and there is the advantage that it is possible to secure precision of the surface of the base 100 on which the gripper and the tool magazine are in close contact with each other.

The pair of guide arms 300 disposed at both sides of the base 100 and forming the insertion space 310 for the tool 700 with the base 100 is formed on a side of the base 100. The first ends of the guide arms 300 are fixed to the base 100 and the second arms have cantilever shapes extending toward the tool 700. The guide protrusions 330 that come in contact with the tool 700 are formed at the second ends of the guide arms 300, and respectively press both sides of the tool 700 by elasticity acting at the second end about the fixed first ends.

The pair of guide arms 300 is symmetrically formed. Accordingly, the guide arms 300 at both sides support the tool 700 with the same pressure by pressing the tool 700 in the opposite directions. In particular, it is possible to set elasticity at a desired level by changing the thickness or the length of the guide arms 300 in the present invention, and particularly, the guide arms 300 may be formed to be elastic such that the tool 700 can be mounted and separated by force of a person without a specific jig.

The guide protrusions 330 formed at the second ends of the guide arms 300 are spaced apart from the second end portions of the guide arm 300 toward the insertion space 310. The guide protrusions 330 are formed in an optimal shape for smoothly inserting and pulling the tool 700 and preventing separation of the tool 700 when the tool 700 are inserted and pulled. Accordingly, the guide protrusions 330, in more detail, each have a first guide portion 331 facing an inlet 370 through which the tool 700 is inserted into the insertion space 310, a second guide portion 333 facing the support 500, and a connecting portion 335 connecting the second guide 333 and the inside of the guide arm 300.

The first guide portions 331 are formed in arc shapes being convex toward the insertion space 310 and having a predetermined curvature, so when the tool 700 is inserted, the tool 700 is guided in contact with the first guide portions 331, whereby the tool 700 is easily inserted. The second guide portion 333 forms a taper from an end of the first guide portion 331 to the guide arm 300. That is, the second guide portions 333 are formed with a small inclination relative to the first guide portions 331 to have wide contact surfaces with the tool 700 so that the tool 700 is inserted in the insertion space 310, is moved on the tapers of the second guide portions 333, and is then positioned and stably mounted in the insertion space 310. The connecting portions 335 are formed to be concave toward the guide protrusions 330 between the second guide portions 333 and the guide arms 300 such that the entire lengths of the guide protrusions 330 are small. Accordingly, the thickness of the guide arms 300 is prevented from increasing due to extension of the guide protrusions 330 to the guide arms 300, and the surfaces on which the second guide portions 333 come in contact with the tool 700 are set. The gripper of the present invention is made of a material having hardness lower than that of the tool 700 and is formed as a single part, whereby wear of the contact surface of the tool 700 due to mounting and separating of the tool 700 is prevented, so there is an effect that durability of the tool 700 is increased. However, as described above, the gripper itself may be made of a material having lower hardness than that of the tool 700, but, depending on cases, the gripper itself may be made of a material having higher hardness than that of the tool 700 and the portions where the guide protrusions 330 come in contact with the tool 700 may be given lower hardness than that of other portion through post-machining or using another material, thereby being able to achieve the objective of preventing wear of the tool 700. This configuration is included in an embodiment of the present invention and can be freely changed in accordance with design, and the present invention is not limited only to this specific example but by the scope which is defined by the appended claims.

A manual groove 350 is formed at the second end of the guide arm 300. The manual groove 350 is a groove formed so that a mounting/separating tool can be inserted in the gripper. The manual groove 350 enables a worker to separate the tool 700 from the gripper by removing the pressing force of the gripper by inserting a mounting/separating tool into the gripper through the manual groove 350 when the worker cannot pull out the tool 700 using force in some cases. The guide protrusion 330 is spaced toward the insertion space 310 from the second end portion of the guide arm 300 and the manual groove 350 is formed between the second end portion and the guide protrusion 330, so it is possible to mount/separate the tool 700 by removing the pressing force of the guide arm 300 through the manual groove 350 when it is impossible to mount/separate the tool 700. In particular, the guide protrusion 330 is spaced toward the insertion space 310 from the second end portion of the guide arm 300 and the second end portion of the guide arm 300 extends after bending toward the insertion space 310, whereby the manual groove 350 is formed between the bending portion 390 and the guide protrusion 330. Accordingly, when a worker cannot mount/separate the tool 700 using only force, it is possible to mount/separate the tool 700 by removing the pressing force of the guide arm 300 by inserting a mounting/separating tool into the gripper.

The base 100 has the support 500 extending toward the tool 700 between the guide arms 300 at both sides and having the supporting protrusion 510 supporting the tool 700 at the end. The support 500 is smaller in thickness than the base 100. The support protrusion 510 has a first end fixed to the support 500 and a second end extending toward the tool 700. The second end portion of the supporting protrusion 510 is formed in a shape corresponding to the outer side of the tool 700 and having a predetermined curvature. In particular, a recessed groove 530 recessed toward the support 500 is formed at the center of the first end of the supporting protrusion 510, so the supporting protrusion 510 is divided into a pair symmetric with the recessive groove 530 therebetween, and the supporting protrusion 510 is formed in a cantilever shape, whereby when the tool 700 is mounted, the ends facing the guide arms 300 elastically press the tool 700 in close contact with the tool 700. As described above, the reason that the supporting protrusion 510 is symmetrically disposed with the recessed groove 530 therebetween is for securing stability of the mounted tool 700 using two points. The number of the supporting protrusions 510 may be freely changed in accordance with design or necessity. The second end portion where the supporting protrusion 510 comes in contact with the tool 700 is given lower hardness than that of the other portion, whereby wear of the contact surface of the tool 700 due to mounting and separating of the tool 700 is prevented and accordingly durability of the tool 700 can be increased.

Further, identification holes 570 are formed in the bottom of the support 500. The identification holes 570 are provided to fix tags for identifying the tool 700 mounted on the gripper and the number and position of the identification holes 570 may be changed in accordance with the design or environment.

In the present invention, the first end of the guide arm 300 bends to make an obtuse angle with the base 100 and then bends and extends to make a right angle, whereby the guide protrusion 330 is given elasticity. In particular, both sides of the first end of the support 500 are recessed inward, so spacing grooves 550 are formed. The gaps between the guide protrusions 330 and the support 500 are uniformly formed from the first ends of the guide arms 300 to the guide protrusions 330 by the spacing grooves 550. The second end of the support 500 is larger in width than the first end, so the contact area between the tool 700 and the support 500 increases.

FIGS. 3 and 4 are views showing a case in which the tool 700 has been mounted on the gripper of the present invention, in which it can be seen that the tool 700 is stably mounted in the insertion space 310 by elasticity of the gripper with a V-groove 710 of the tool 700 fitted on the guide protrusions 330 and the supporting protrusion 510 of the gripper.

Therefore, according to the tool gripper for a machine tool of the present invention described above, since the gripper is formed in an integrated type that minimizes the components, there is the advantage that manufacturing and assembling are simple and mass production is easy in comparison to the related art. Further, maintenance and replacement are easy, so productivity is improved. Further, when a worker manually inserts and pulls out a tool, the worker can work with only one hand, so convenience for the worker can be remarkably improved.

Although the present invention was provided above in relation to specific embodiments shown in the drawings, it is apparent to those skilled in the art that the present invention may be changed and modified in various ways without departing from the scope of the present invention, which is described in the following claims.

### <Description of the Reference Numerals in the Drawings>

| | | | |
|---|---|---|---|
| 100: | base | 110: | fastening hole |
| 130: | positioning hole | 300: | guide arm |
| 310: | insnertion space | 330: | guide protrusion |
| 331: | first guide portion | 333: | second guide portion |
| 335: | connecting portion | 350: | manual groove |
| 370: | inlet | 390: | bending portion |
| 500: | support | 510: | supporting protrusion |
| 530: | recession groove | 550: | spacing groove |
| 570: | identification hole | 700: | tool |
| 710: | V-groove | | |

## Claims

1. A tool gripper for a machine tool, comprising:
a base (100) to which a tool magazine can be detachably coupled;
a pair of guide arms (300) disposed at both sides of the base (100) to make an insertion space (310) for a tool (700) with the base (100), each having a first end fixed to the base (100) and a second end having a cantilever shape extending toward the tool (700), and each having a guide protrusion (330) formed at the second end to come in contact with the tool (700) such that the guide protrusions (330) press both sides of the tool (700) by elasticity acting at the second ends about fixed first ends; and
a support (500) extending toward the tool (700) between the guide arms (300) at both sides of the base (100) and having a supporting protrusion (510) supporting the tool (700) at an end,
**characterised in that**:
the guide protrusions (330) are spaced apart from second end portions of the guide arms (300) toward the insertion space (310) for the tool (700) and manual grooves (350) are formed between the second end portions and the guide protrusions (330), so the tool (700) can be mounted and demounted by removing pressing force of the guide arms (300) through using the manual grooves (350) when the tool (700) cannot be mounted or demounted.

2. The tool gripper of claim 1, wherein the guide arms (300) and the support (500) are disposed at a side of the base (100), and a fastening hole (110) for fastening the tool magazine and a position hole (130) in which a fixing pin enabling relative positioning to the tool magazine is fastened are formed at another side of the base (100).

3. The tool gripper of claim 1, wherein the pair of guide arms (300) is symmetrically formed and supports the tool (700) with the same pressure by pressing the tool (700) in opposite directions.

4. The tool gripper of claim 1, wherein the second end portions of the guide arms (300) bend into the insertion space (310) for the tool (700) and then extend such that bending portions (390) and the guide protrusions (330) form the manual grooves (350) for manually loading and unloading the tool (700).

5. The tool gripper of claim 1, wherein the supporting protrusion (510) has a first end fixed to the support (500), a second end extending toward the tool (700), and a second end portion formed in a shape corresponding to an outer side of the tool (700) and having a predetermined curvature.

6. The tool gripper of claim 5, wherein a recessed groove (530) recessed toward the support (500) is formed at a center of the first end of the supporting protrusion (510), so the supporting protrusion (510) is divided into a pair symmetric with the recessed groove (530) therebetween, and the supporting protrusion (510) is formed in a cantilever shape, whereby when the tool (700) is mounted, ends facing the guide arms (300) elastically press the tool (700) in close contact with the tool (700).

7. The tool gripper of claim 1, wherein the base (100), the guide arms (300), and the support (500) are made of the same material as a single part.

8. The tool gripper of claim 1, wherein the guide protrusion (330) has a first guide portion (331) facing an inlet (370) through which the tool (700) is inserted into the insertion space (310) and a second guide portion (333) facing the support.

9. The tool gripper of claim 8, wherein the first guide portions (331) are formed in arc shapes being convex toward the insertion space (310) and having a predetermined curvature, so when the tool (700) is inserted, the tool (700) is guided in contact with the first guide portions (331) .

10. The tool gripper of claim 8, wherein the second guide portion (333) forms a taper from an end of the first guide portion (331) to the guide arm (300).

11. The tool gripper of claim 8, wherein the guide protrusion (330) further has a connecting portion (335) formed to be concave toward the guide protrusion (330) between the second guide portion (333) and the guide arm (300) such that the entire length of the guide protrusion (330) is small.

12. The tool gripper of claim 1, wherein the first end of the guide arm (300) bends to make an obtuse angle with the base (100) and then bends and extends toward the second end of the guide arm (300) to make a right angle, whereby the guide protrusion (330) is given elasticity.

13. The tool gripper of claims 5 and 12, wherein both sides of the first end of the support (500) are recessed inward, so spacing grooves (550) are formed, and gaps between the guide protrusions (330) and the support (500) are uniformly formed from the first ends of the guide arms (300) to the guide protrusions (330) by the spacing grooves (550).

14. The tool gripper of claim 13, wherein the second end of the support (500) is larger in width than the first end, so a contact area between the tool (700) and the support (500) increases.

15. The tool gripper of claim 1, wherein a point where the guide protrusion (330) comes in contact with the tool (700) is given lower hardness than that of the other portion or the tool gripper of claim 5, wherein the second end portion of the supporting protrusion (510) is given lower hardness than that of the other portion.

## Patentansprüche

1. Werkzeuggreifer für eine Werkzeugmaschine, aufweisend:
eine Basis (100), mit der ein Werkzeugmagazin lösbar gekoppelt werden kann,
ein Paar von Führungsarmen (300), die an beiden Seiten der Basis (100) angeordnet sind, um einen Einsetzraum (310) für ein Werkzeug (700) mit der Basis (100) zu bilden, wobei jeder ein erstes Ende, das an der Basis (100) befestigt ist, und ein zweites Ende hat, das eine Auslegerform hat, die sich in Richtung zu dem Werkzeug (700) erstreckt, und wobei jeder einen Führungsvorsprung (330) hat, der an dem zweiten Ende ausgebildet ist, um mit dem Werkzeug (700) in Kontakt zu kommen, so dass die Führungsvorsprünge (330) durch Elastizität gegen beide Seiten des Werkzeugs (700) drücken, die an den zweiten Enden um befestigte erste Enden wirkt, und
eine Stütze (500), die sich zwischen den Führungsarmen (300) an beiden Seiten der Basis (100) in Richtung zu dem Werkzeug (700) erstreckt und einen Stützvorsprung (510) hat, der das Werkzeug (700) an einem Ende stützt,
**dadurch gekennzeichnet, dass**:
die Führungsvorsprünge (330) von zweiten Endabschnitten der Führungsarme (300) in Richtung zu dem Einsetzraum (310) für das Werkzeug (700) im Abstand angeordnet sind und manuelle Nuten (350) zwischen den zweiten Endabschnitten und den Führungsvorsprüngen (330) ausgebildet sind, so dass das Werkzeug (700) durch Aufheben einer Druckkraft der Führungsarme (300) unter Verwendung der manuellen Nuten (350) montiert und demontiert werden kann, wenn das Werkzeug (700) nicht montiert oder demontiert werden kann.

2. Werkzeuggreifer gemäß Anspruch 1, wobei die Führungsarme (300) und die Stütze (500) an einer Seite der Basis (100) angeordnet sind und ein Befestigungsloch (110) zum Befestigen des Werkzeugmagazins und ein Positionsloch (130), in dem ein Befestigungsstift befestigt ist, der eine relative Positionierung zum Werkzeugmagazin ermöglicht, an einer anderen Seite der Basis (100) ausgebildet sind.

3. Werkzeuggreifer gemäß Anspruch 1, wobei das Paar von Führungsarmen (300) symmetrisch ausgebildet ist und das Werkzeug (700) durch Drücken des Werkzeugs (700) in entgegengesetzte Richtungen mit dem gleichen Druck abstützt.

4. Werkzeuggreifer gemäß Anspruch 1, wobei die zweiten Endabschnitte der Führungsarme (300) sich in den Einsetzraum (310) für das Werkzeug (700) biegen und sich dann so erstrecken, dass Biegeabschnitte (390) und die Führungsvorsprünge (330) die manuellen Nuten (350) zum manuellen Laden und Entladen des Werkzeugs (700) bilden.

5. Werkzeuggreifer gemäß Anspruch 1, wobei der Stützvorsprung (510) aufweist: ein erstes Ende, das an der Stütze (500) befestigt ist, ein zweites Ende, das sich in Richtung zu dem Werkzeug (700) erstreckt, und einen zweiten Endabschnitt, der in einer Form ausgebildet ist, die mit einer Außenseite des Werkzeugs (700) korrespondiert und eine vorbestimmte Krümmung hat.

6. Werkzeuggreifer gemäß Anspruch 5, wobei eine Aussparungsnut (530), die in Richtung zu der Stütze (500) ausgespart ist, in einer Mitte des ersten Endes des Stützvorsprungs (510) ausgebildet ist, so dass der Stützvorsprung (510) in ein Paar geteilt ist, das symmetrisch ist, mit der Aussparungsnut (530) dazwischen, und der Stützvorsprung (510) in einer Auslegerform ausgebildet ist, wodurch, wenn das Werkzeug (700) montiert ist, Enden, die den Führungsarmen (300) zugewandt sind, das Werkzeug (700) in engem Kontakt mit dem Werkzeug (700) elastisch drücken.

7. Werkzeuggreifer gemäß Anspruch 1, wobei die Basis (100), die Führungsarme (300) und die Stütze (500) aus dem gleichen Material als ein einziges Teil hergestellt sind.

8. Werkzeuggreifer gemäß Anspruch 1, wobei der Führungsvorsprung (330) aufweist: einen ersten Führungsabschnitt (331), der einem Einlass (370) zugewandt ist, durch den hindurch das Werkzeug (700) in den Einsetzraum (310) eingesetzt wird, und einen zweiten Führungsabschnitt (333), der der Stütze zugewandt ist.

9. Werkzeuggreifer gemäß Anspruch 8, wobei die ersten Führungsabschnitte (331) in Bogenformen ausgebildet sind, die in Richtung zum Einsetzraum (310) konvex sind und eine vorbestimmte Krümmung haben, so dass das Werkzeug (700) beim Einsetzen des Werkzeugs (700) in Kontakt mit den ersten Führungsabschnitten (331) geführt wird.

10. Werkzeuggreifer gemäß Anspruch 8, wobei der zweite Führungsabschnitt (333) eine Verjüngung von einem Ende des ersten Führungsabschnitts (331) zu dem Führungsarm (300) ausbildet.

11. Werkzeuggreifer gemäß Anspruch 8, wobei der Führungsvorsprung (330) ferner einen Verbindungsabschnitt (335) aufweist, der ausgebildet ist, um in Richtung zu dem Führungsvorsprung (330) zwischen dem zweiten Führungsabschnitt (333) und dem Führungsarm (300) konkav zu sein, so dass die gesamte Länge des Führungsvorsprungs (330) gering ist.

12. Werkzeuggreifer gemäß Anspruch 1, wobei das erste Ende des Führungsarms (300) sich biegt, um einen stumpfen Winkel mit der Basis (100) zu bilden, und sich dann biegt und sich in Richtung zu dem zweiten Ende des Führungsarms (300) erstreckt, um einen rechten Winkel zu bilden, wodurch dem Führungsvorsprung (330) Elastizität verliehen wird.

13. Werkzeuggreifer gemäß den Ansprüchen 5 und 12, wobei beide Seiten des ersten Endes der Stütze (500) nach innen ausgespart sind, so dass Abstandsnuten (550) ausgebildet werden, und Lücken zwischen den Führungsvorsprüngen (330) und der Stütze (500) durch die Abstandsnuten (550) gleichmäßig von den ersten Enden der Führungsarme (300) zu den Führungsvorsprüngen (330) gebildet werden.

14. Werkzeuggreifer gemäß Anspruch 13, wobei das zweite Ende der Stütze (500) eine größere Breite als das erste Ende hat, so dass sich eine Kontaktfläche zwischen dem Werkzeug (700) und der Stütze (500) vergrößert.

15. Werkzeuggreifer gemäß Anspruch 1, wobei ein Punkt, an dem der Führungsvorsprung (330) mit dem Werkzeug (700) in Kontakt kommt, eine geringere Härte als diejenige des anderen Abschnitts hat, oder Werkzeuggreifer gemäß Anspruch 5, wobei der zweite Endabschnitt des Stützvorsprungs (510) eine geringere Härte als diejenige des anderen Abschnitts hat.

## Revendications

1. Dispositif de préhension d'outil pour une machine-outil, comprenant :
une base (100) à laquelle un magasin d'outils peut être couplé de manière amovible ;
une paire de bras de guidage (300) disposés sur les deux côtés de la base (100) pour créer un espace d'insertion (310) pour un outil (700) avec la base (100), chacun ayant une première extrémité fixée à la base (100) et une deuxième extrémité ayant une forme de cantilever s'étendant vers l'outil (700), et chacun ayant une saillie de guidage (330) formée à la deuxième extrémité pour entrer en contact avec l'outil (700) de sorte que les saillies de guidage (330) pressent les deux côtés de l'outil (700) par une élasticité agissant aux deuxièmes extrémités autour de premières extrémités fixes ; et
un support (500) s'étendant vers l'outil (700) entre les bras de guidage (300) sur les deux côtés de la base (100) et ayant une saillie de support (510) supportant l'outil (700) à une extrémité,
**caractérisé en ce que** :
les saillies de guidage (330) sont espacées de deuxièmes parties d'extrémité des bras de guidage (300) vers l'espace d'insertion (310) de l'outil (700) et des rainures manuelles (350) sont formées entre les deuxièmes parties d'extrémité et les saillies de guidage (330), de sorte que l'outil (700) peut être monté et démonté en supprimant une force de pression des bras de guidage (300) en utilisant les rainures manuelles (350) lorsque l'outil (700) ne peut pas être monté ou démonté.

2. Dispositif de préhension d'outil selon la revendication 1, dans lequel les bras de guidage (300) et le support (500) sont disposés sur un côté de la base (100), et un trou de fixation (110) pour fixer le magasin d'outils et un trou de position (130) dans lequel est fixée une broche de fixation permettant un positionnement relatif au magasin d'outils sont formés sur un autre côté de la base (100).

3. Dispositif de préhension d'outil selon la revendication 1, dans lequel la paire de bras de guidage (300) est formée symétriquement et supporte l'outil (700) avec la même pression en pressant l'outil (700) dans des directions opposées.

4. Dispositif de préhension d'outil selon la revendication 1, dans lequel les deuxièmes parties d'extrémité des bras de guidage (300) se plient dans l'espace d'insertion (310) pour l'outil (700) et s'étendent ensuite de telle sorte que des parties pliées (390) et les saillies de guidage (330) forment les rainures manuelles (350) pour charger et décharger manuellement l'outil (700).

5. Dispositif de préhension d'outil selon la revendication 1, dans lequel la saillie de support (510) a une première extrémité fixée au support (500), une deuxième extrémité s'étendant vers l'outil (700), et une deuxième partie d'extrémité formée dans une forme correspondant à un côté extérieur de l'outil (700) et ayant une courbure prédéterminée.

6. Dispositif de préhension d'outil selon la revendication 5, dans lequel une rainure évidée (530) évidée vers le support (500) est formée à un centre de la première extrémité de la saillie de support (510), de sorte que la saillie de support (510) est divisée en une paire symétrique avec la rainure évidée (530) entre les deux, et la saillie de support (510) est formée en forme de cantilever, de sorte que, lorsque l'outil (700) est monté, des extrémités faisant face aux bras de guidage (300) pressent élastiquement l'outil (700) en contact étroit avec l'outil (700).

7. Dispositif de préhension d'outil selon la revendication 1, dans lequel la base (100), les bras de guidage (300) et le support (500) sont fabriqués du même matériau en une seule pièce.

8. Dispositif de préhension d'outil selon la revendication 1, dans lequel la saillie de guidage (330) a une première partie de guidage (331) faisant face à une entrée (370) par laquelle l'outil (700) est inséré dans l'espace d'insertion (310) et une deuxième partie de guidage (333) faisant face au support.

9. Dispositif de préhension d'outil selon la revendication 8, dans lequel les premières parties de guidage (331) sont formées en formes d'arc étant convexes vers l'espace d'insertion (310) et ayant une courbure prédéterminée, de sorte que, lorsque l'outil (700) est inséré, l'outil (700) est guidé en contact avec les premières parties de guidage (331).

10. Dispositif de préhension d'outil selon la revendication 8, dans lequel la deuxième partie de guidage (333) forme un rétrécissement à partir d'une extrémité de la première partie de guidage (331) jusqu'au bras de guidage (300) .

11. Dispositif de préhension d'outil selon la revendication 8, dans lequel la saillie de guidage (330) comporte en outre une partie de connexion (335) formée pour être concave vers la saillie de guidage (330) entre la deuxième partie de guidage (333) et le bras de guidage (300) de sorte que la longueur totale de la saillie de guidage (330) est petite.

12. Dispositif de préhension d'outil selon la revendication 1, dans lequel la première extrémité du bras de guidage (300) se plie pour former un angle obtus avec la base (100), puis se plie et s'étend vers la deuxième extrémité du bras de guidage (300) pour former un angle droit, ce qui confère de l'élasticité à la saillie de guidage (330).

13. Dispositif de préhension d'outil selon les revendications 5 et 12, dans lequel les deux côtés de la première extrémité du support (500) sont évidés vers l'intérieur, de sorte que des rainures d'espacement (550) sont formées, et des espaces entre les saillies de guidage (330) et le support (500) sont uniformément formés à partir des premières extrémités des bras de guidage (300) vers les saillies de guidage (330) par les rainures d'espacement (550) .

14. Dispositif de préhension d'outil selon la revendication 13, dans lequel la deuxième extrémité du support (500) est plus large que la première extrémité, de sorte qu'une surface de contact entre l'outil (700) et le support (500) augmente.

15. Dispositif de préhension d'outil selon la revendication 1, dans lequel un point où la saillie de guidage (330) entre en contact avec l'outil (700) a une dureté inférieure à celle de l'autre partie, ou dispositif de préhension d'outil selon la revendication 5, dans lequel la deuxième partie d'extrémité de la saillie de support (510) a une dureté inférieure à celle de l'autre partie.
